# EUROPEAN PATENT APPLICATION

(11) **EP 2 835 565 A1**
(43) Date of publication of application: **11.02.2015**
(21) Application number: 14179616.9
(22) Date of filing: 04.08.2014
(51) Int. Cl.: F16K 15/20, B60C 23/12

(54) **Air maintenance tire comprising a valve assembly**

(30) Priority: 07.08.2013 US 201313960849
(71) Applicant: The Goodyear Tire & Rubber Company, Akron, Ohio 44316 (US)
(72) Inventor: Cuny, Andre, B-6720 Habay-la-Neuve (BE); Piret, Gauthier, B-4970 Ster-Francorchamps (BE); Di Giacomo Russo, Massimo, L-8289 Kehlen (LU)
(74) Representative: Kutsch, Bernd

(57) **Abstract**

An air maintenance tire comprising a tread region, first and second sidewalls extending from the tread region, a tire cavity and an air passageway enclosed within a flexing region of a tire wall is disclosed. The air passageway has an air inlet portal operable to admit air into the air passageway and an outlet portal preferably spaced apart from the inlet portal operable to withdraw pressurized air from the air passageway. The air passageway operably closes segment by segment in reaction to induced forces from the tire flexing region as the flexing region of the tire wall rotates adjacent a rolling tire footprint and has at least one check valve device seated within the air passageway. The tire further comprises a relief valve assembly (10) comprising a chamber body (20), a valve (50), a piston (80), and a ring (90) or seal, the valve (50) having a valve body and a deformable or moveable valve head (54).

## Description

### Field of the Invention

The present invention relates generally to air maintenance tires and, more specifically, to a tire comprising an air pump apparatus which maintains air pressure within the tire as the tire rotates under load.

### Background of the Invention

Normal air diffusion reduces tire pressure over time. The natural state of pneumatic tires is under inflated. Accordingly, drivers must repeatedly act to maintain tire pressures or they will see reduced fuel economy, tire life, and/or reduced vehicle braking and handling performance. Tire pressure monitoring systems have been proposed to warn drivers when tire pressure is significantly low. Such systems, however, remain dependent upon the driver taking remedial action when warned to reinflate a pneumatic tire to the recommended pressure. It is a desirable, therefore, to incorporate a self-inflating feature within a pneumatic tire that will self-inflate the tire in order to compensate for any reduction in tire pressure over time without the need for driver intervention.

### Summary of the Present Invention

The invention relates to an air-maintenance tire in accordance with claim 1.

Dependent claims refer to preferred embodiments of the invention.

An air maintenance tire and air pump assembly in accordance with a preferred aspect of the present invention includes a tire having a tread region and first and second sidewalls extending from the tread region and a tire cavity for maintaining pressure; an elongate tubular air passageway enclosed within a flexing region of a tire wall, the air passageway having an air inlet portal operable to admit air into the air passageway and an outlet portal spaced apart from the inlet portal operable to withdraw pressurized air from the air passageway, the air passageway operably closing segment by segment in reaction to induced forces from the tire flexing region as the flexing region of the tire wall rotates adjacent a rolling tire footprint, the elongate air passageway having at least one check valve device seated within the axial air passageway; and a relief valve assembly comprising a chamber body, a valve, a piston, and a silicone ring, the valve having a valve body and a valve head, the valve head, deforming to release over-pressurized air from the tire cavity to atmosphere.

According to another preferred aspect of the tire, the valve head is encased by an elastic material and closes an orifice of the chamber body thereby allowing air escape to atmosphere.

According to still another preferred aspect of the tire, the piston is movable for extension through the chamber body from an internal cavity of the valve body to an internal cavity of the chamber body.

According to yet another preferred aspect of the tire, a gasket seals an interface between the piston and the sleeve.

According to still another preferred aspect of the tire, the valve body is tubular with the sleeve being partially radially inserted into the valve body.

According to yet another preferred aspect of the tire, the sleeve includes a radial bore defining an air way extending between an internal cavity of the chamber body and an internal cavity of the valve body.

According to still another preferred aspect of the tire, the sleeve and the piston partially define a valve internal cavity.

According to yet another preferred aspect of the tire, the silicone ring is fitted to an end of the piston.

According to still another preferred aspect of the tire, the piston and the silicone ring are entirely within an internal cavity of the valve body and, simultaneously, flow through a radial bore within the sleeve is unobstructed.

According to yet another preferred aspect of the tire, pressure within the chamber body and the valve body are equalized by radial clearance between the sleeve and the piston.

According to still another preferred aspect of the tire, the piston and silicone ring are entirely within the sleeve and air through a radial bore of the sleeve is obstructed.

According to yet another preferred aspect of the tire, the relief valve assembly is configured such that the pressure within the chamber body and the pressure within the valve body are independent and separate.

According to still another preferred aspect of the tire, an axial movement of the piston and the silicone ring into the sleeve operably causes a pressure decrease in the valve body such that a release vent of the tire cavity to the chamber body is no longer completely blocked by the valve head.

According to yet another preferred aspect of the tire, the valve head is maintained in a deformed condition.

According to still another preferred aspect of the tire, the chamber body includes preferably radial outlets to atmosphere.

According to yet another preferred aspect of the tire, a supplemental spacer axially adjacent to the sleeve for mitigating twisting during assembly.

A second air maintenance tire and air pump assembly, for use with the present invention, includes a tire; an elongate tubular air passageway enclosed within a flexing region of a tire wall, the air passageway having an air inlet portal operable to admit air into the air passageway and an outlet portal spaced apart from the inlet portal operable to withdraw pressurized air from the air passageway, the air passageway operably closing segment by segment in reaction to induced forces from the tire flexing region as the flexing region of the tire wall rotates opposite to a rolling tire footprint. Multiple spaced apart check valve devices are seated within and along the axial air passageway, dividing the air passageway into multiple passageway segments. Each check valve device has an external dimension and configuration operable to substantially occupy the air passageway. A valve gate, such as a membrane, allows pressurized air to directionally pass through the check valve device from an upstream passageway segment to a downstream passageway segment. The valve gate in a closed position prohibits air from passing in an opposite direction through the check valve body from the downstream passageway segment to the upstream passageway segment.

In another preferred aspect of the second assembly, the air passageway may alternatively be configured as an integrally formed passageway within the tire sidewall or as an axial passage provided by a flexible air tube that is assembled to the tire in a post-cure procedure.

In still another preferred aspect of the second assembly, each check valve device is configured as a tubular body closely received within the air passageway, the tubular body having outwardly projecting retention barb(s) for securing the tubular body at a preferred location within the air passageway. The tubular body houses a flexible membrane member which serves as the valve gate. The membrane opens along a slit to admit pressurized air from one side of the check valve device to an opposite side.

In yet another preferred aspect of the second assembly, the check valve devices may be positioned and spaced along a continuous air passageway extending between the inlet and outlet portals, or, alternatively, serve to connect air tube segments together in a splicing check valve configuration.

### Definitions

"Footprint" means the contact patch or area of contact of the tire tread with a flat surface at zero speed and under normal load and pressure.

### Brief Description of the Drawings

The invention will be described by way of example and with reference to the accompanying drawings in which:
FIG. 1 is a schematic sectional view of a valve in accordance with the present invention.
FIG. 2 is a schematic detail of the valve of FIG. 1 under a first condition.
FIG. 3 is a schematic detail of the valve of FIG. 1 under a second condition.
FIG. 4 is a schematic perspective sectional view of the valve of FIG. 1.

### Detailed Description of Examples of the Present Invention

A pneumatic tire and air maintenance pump assembly (forming an "air maintenance tire" or "AMT") in accordance with the present invention includes a pneumatic tire and an example vein pump assembly as set forth in US-A-2014/0110029. The general operation of one example peristaltic pump for use in an example pneumatic tire is described in US-A- 8,113,254 and US-A- 8,042,586.

The pneumatic tire is constructed to provide a tread region, a pair of sidewalls extending from opposite bead areas to the tire tread region. The pneumatic tire encloses a tire cavity. The air maintenance assembly preferably includes an elongate air tube that encloses an annular passageway. The tube may be formed of a resilient, elastomeric flexible material, such as plastic or rubber compounds and composites that may withstand repeated deformation cycles wherein the tube is deformed into a flattened condition subject to external force/load and, upon removal of such force, returns to an original condition generally circular in cross-section. The tube has a diameter sufficient to operatively pass a volume of air for the purpose of maintaining air pressure within the tire cavity. One example tube may follow a 180 degree semicircular path. However, other configurations may also be employed.

The example air maintenance vein pump assembly further includes an inlet device and an outlet device preferably spaced apart approximately 180 degrees at respective opposite end locations of the air tube. The outlet device may have a T-shaped configuration in which T-forming sleeves connect to an end of the tube and an outlet conduit may conduct air from the tube to the tire cavity. The inlet device likewise may have a T-shaped configuration, connecting to an opposite end of the tube and having an inlet conduit which intakes outside air into the tube passageway. The patents mentioned above provide examples of the outlet and inlet devices. Commercially available valve mechanisms for controlling air intake into the tube and air outlet from the tube into the cavity may be used within the inlet and outlet devices.

The air tube, inlet device, and the outlet device may be positioned within an appropriately complementarily configured channel within one of the tire sidewalls. As the example pneumatic tire rotates, under load, a footprint is formed against a ground surface. A compressive force is thus be directed into the pneumatic tire from the footprint and acts to flatten a segment of the air tube and passageway. As the tire rotates further, portions of the air tube and passageway are sequentially flattened and pump air in a direction toward the tire cavity. Flattening of the tube, segment by segment, or portion by portion, thereby forces air from the inlet along the passageway until the pressurized air is directed from the outlet and into the tire cavity. An appropriate valve mechanism at the outlet may vent air in the event that the tire cavity pressure exceeds the recommended tire pressure. Typically, pumping of air may occur for one-half the revolution of the tire with the 180 degree air tube configuration.

An alternative 360 degree air tube may functions as described above, other than air being pumped along the air tube in one direction for an entire 360 degree revolution of the pneumatic tire. In an example pneumatic tire with two 180 degree peristaltic tubes, the pump may function in either direction of tire rotation. The two air tubes may each be operational in a respective direction of rotation to pump air into the tire cavity.

A plurality of check valves may be provided for placement in the passageway of the air tube. The check valves may include a cylindrical valve body composed of any suitable rigid or semi-rigid material. The valve body may have a rounded forward end rim. An array of outwardly directed retention ribs or flanges may be spaced apart along a surface of the valve body, each retention rib angling to the rear of the valve body. A flexible, elastomeric membrane member may be inserted into a central through-passage of the valve body. The membrane member may include a cylindrical membrane body captured within the valve body by means of turning in end flanges of the valve body. The membrane member may further include a central projecting nose with a slit there-through. The nose may form a gate through which pressurized air may flow in a forward direction while preventing back flow of air through the check valve in a rearward direction.

As stated above, multiple check valves may be inserted into the axial passageway of the tube. The multiple check valves may occupy spaced apart, respective locations within the tube in an orientation which facilitates a flow of pressurized air in a forward direction from the inlet to the outlet, but which prevents a back flow of pressurized air in the reverse direction. A pressurized air source may be positioned to inject pressurized air into the passageway, thereby radially expanding the tube such that the passageway flexes to a temporary, oversized diameter. A stopper may be inserted into a forward end of the tube to prevent the pressurized air from escaping to atmosphere.

At the check valve location in the passageway, a clamping collar may be affixed over the tube and may exert a radial force on the tube, thereby preventing the tube from expanding at that location. Thereafter, a check valve may be inserted into an open end of the tube with the membrane member, or gate, opening toward the outlet end of the tube. A rod may push the check valve through the expanded tube until it reaches its intended location within passageway.

The clamping collar may then be removed and relocated down the axial length of the tube to a second check valve location. The second check valve may be positioned at the open end of the tube and pushed by rod through the diametrically expanded tube to the intended second check valve location within the passageway. This procedure may be repeated until all of the check valves are in place within the passageway. Once the pressurized air flow is withdrawn from the passageway, the tube may elastically radially contract to its original, unexpanded condition. The tube by its resilient radial contraction thereby captures each placed check valve and exerts a radial compression force on the check valve bodies to hold the check valves in their intended locations within the passageway. With the radial contraction of the tube, the retention flanges or barbs on the sides of the cylindrical valve body of each check valve may engage the sidewalls of the tube, and thus function, in conjunction with the tube radial clamping force on the check valves, to retain the check valves in their intended locations.

Multiple secondary retention clamps, each in the form of a cylindrical collar, may be deployed over respective locations along the tube where the check valves have been positioned. The clamps may be formed of flexible material ,such as plastic or metal. The clamps may be openable to facilitate receipt of the tube through each clamp. Subsequently, the clamps may be closed into a circular configuration, overlap locking flanges, and engage each clamp in a closed circular configuration over the tube. The opening through the clamps may be sized nominally smaller than the tube diameter such that the closed clamps squeeze the tube radially inward over the check valves.

The resilient, radially directed force on the exterior of the tube, combined with engagement of each check valve's retention flanges with the interior of the tube and the clamps, may provide redundant means for retaining each check valve in its intended location within the passageway. Opening and closing of the check valves during operation of the pump assembly will accordingly not act to dislocate any of the check valves from their positions within the tube.

An alternatively configured check valve may have a splice configuration. The check valve may have an elongate valve body (cylindrical or other shape). First and second arrays of retention flanges or barbs may be provided, the first array at a forward location along the elongate body and the second array at a rearward location along the elongate body. The elongate body may have a centered membrane insert configured to operate in the manner described above. The elongate body may splice two segments of tube together. An end of each of the tubes may attach at a respective end of the elongate body, whereupon the barb arrays may engage internal sidewalls of the tube.

Upon completed assembly of the check valves with the tube, the tube may be inserted into a complementarily configured channel formed within a tire sidewall. The lower sidewall region above, or adjacent, the bead region may flex sufficiently to allow for the segment by segment air pumping action by the tube described above. If desired, higher locations on the tire sidewall may be used as the location for the tube without departing from the present invention. One or both of the tire sidewalls may contain an air pumping tube, if desired, and the system may be configured in a 180 degree, 360 degree, or dual 180 degree tube configuration.

While the tube may be generally of circular cross-section, alternative tube sectional configurations may be used (e.g., ellipse, mushroom-shape, square, triangle pentagon, hexagon, octagon, etc.). The tube may fit into a sidewall groove with a cap abutting an outer sidewall surface. The check valves may have a complementary external shape and configuration to the shape of the air passageway into which the check valves are placed. Likewise, the clamping mechanisms may be configured to fit over the tube configuration in order to impose a radial clamping force on a check valve.

The check valves between the tube segments may open only in a forward direction between air inlet and air outlet and do not allow any back flow of air within the tube in a reverse direction. A series of segments may be strung together with adjacent segments separated by a check valve (e.g., a vein-type system).. The adjoining segments may sequentially pump air, segment to segment, as the tire-mounted tube moves adjacent a rolling tire footprint. The check valves thus prevent a back flow of air and operate to increase the pumping efficiency of the vein/tube system. Consequently, the vein/tube volumetric size may be relatively small without compromising achievement of the requisite air pumping volume necessary for maintaining the tire at its rated pressure. The check valve and vein segment construction may improve the air pressure level at the outlet beyond what would be attained from a single segment, non-check valve, tube of equal length.

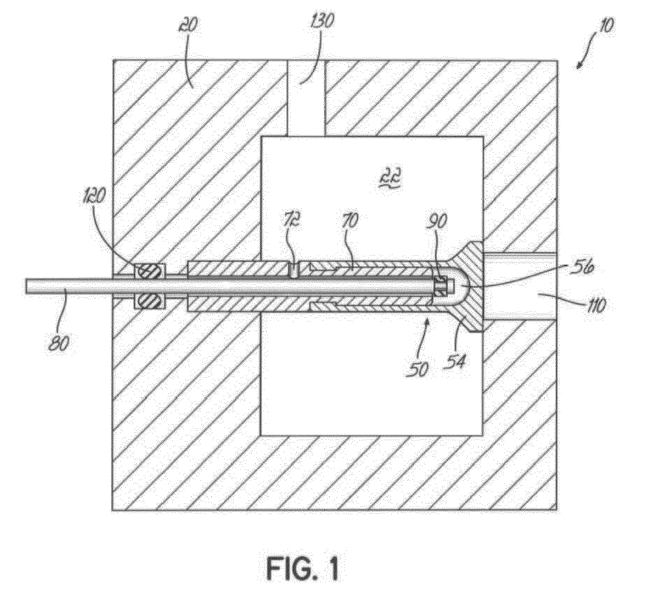

An adjustable valve assembly 10 (FIG. 1) in accordance with the present invention, for use with pneumatic tires or systems such as the example described above, is in a closed position when the air pressure of the tire cavity is below a selected pressure and in an opened position when the air pressure is above the selected pressure (e.g., pressure relief, relief valve, etc.). The selected pressure may be adjustable by the valve assembly 10. When a selected pressure is exceeded in the tire cavity, the valve assembly 10 opens thereby allowing exhaust air to another location, and eventually to atmosphere. The adjustable valve assembly 10 may define an internal circumferential channel with both extremities: one in the tire chamber and the other at the external part of the tire.

The adjustable valve assembly 10 includes a chamber body 20, a valve 50, a sleeve 70, a piston 80, and a ring 90 or seal such as a silicone ring. The valve 50 includes a valve body and a valve head 54 preferably encased by an elastic material and closing an orifice 110 of the chamber body 20 thereby allowing air escape, or air pressure relief, when the valve is in an opened position. A part of the movable piston 80 may extend through the chamber body 20 from an internal cavity 56 of the valve body 50 to an internal cavity 22 of the chamber body 20 and be sealed by a gasket or gaskets 120, such as gaskets or o-rings. The chamber internal cavity 22 may be pressurized to a predetermined air pressure. The valve body 50 may be tubular with part of the sleeve 70 partially inserted into the valve body (FIG. 1).

The valve body 50 may include a bore 72 preferably radially drilled to define an air way extending between the chamber internal cavity 22 and the valve internal cavity 56. The sleeve 70 and the piston 80 may partially define the valve internal cavity 56. A silicone ring 90 may be fixed/fitted to an end of the piston 80 opposite the o-ring(s) 120.

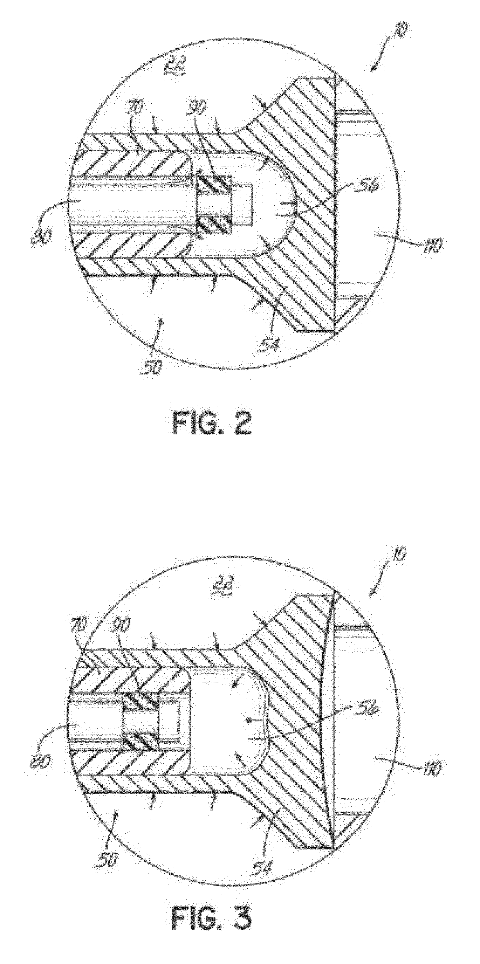

When the piston 80 and silicone ring 90 are entirely within the valve internal cavity 56, the bore 72 between the chamber internal cavity 22 and the valve internal cavity is open. In this instance, the pressure within the chamber internal cavity 22 and the valve internal cavity 56 may be equalized by radial clearance between the sleeve 70 and the piston 80 (FIG. 2). When the piston 80 and silicone ring 90 are entirely within the sleeve 70, air through the bore 72 is blocked. In this instance, the pressure within the chamber internal cavity 22 and the valve internal cavity 56 are independent and separate (FIG. 3).

When the chamber internal cavity 22 has a first pressure (FIG.2), axial movement of the piston 80 and the silicone ring 90 into the sleeve 70 causes a pressure decrease/vacuum in the valve internal cavity 56 such that a pump connection, or release vent, 110 of the tire cavity to the chamber internal cavity 22 is no longer completely blocked by the valve head 54 (e.g., deformation of the elastic/elastomeric valve head, etc.). Thus, while the piston 80 and silicone ring 90 remain in this position, the pressure in the chamber internal cavity 22 may not exceed the first pressure even if an external operation, such as by an AMT assembly as described above, attempts to increase the pressure in the chamber internal cavity.

The valve 50 may be balanced at the first pressure and the smaller air pressure in the valve internal cavity 56 may maintain the valve head in a deformed condition. Air may escape the chamber internal cavity 22 through an exhaust vent 130 to atmosphere. The exhaust vent 130 may be one or more radial outlets from the chamber internal cavity 22.

Once the pressure in the valve internal cavity 56 is at its desired value, the assembly 10 may be used in coordination with an AMT assembly, such as the example described above. At this time, the valve head 54 closes the exhaust vent 110. The valve head 54 may be plastic, resin, silicone, and/or other suitable material.

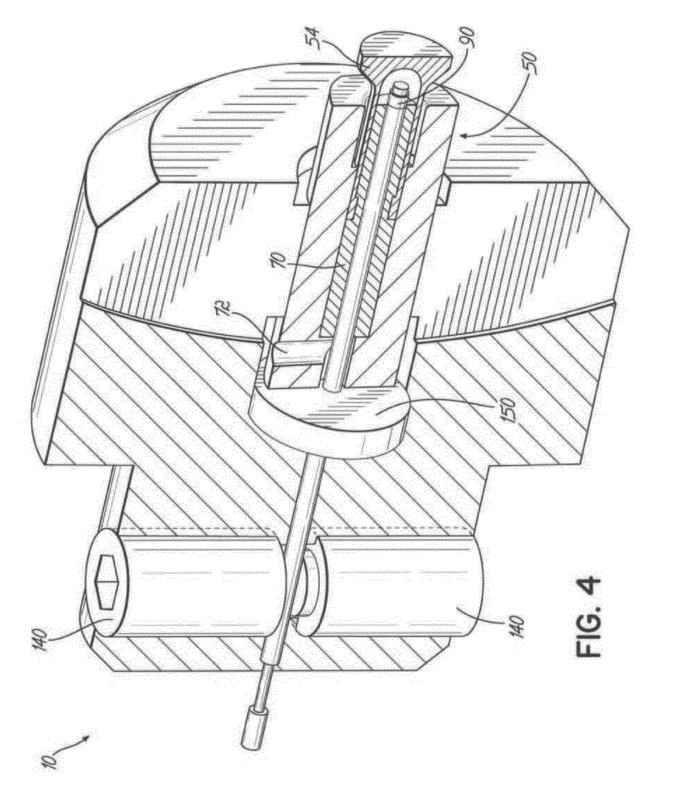

The assembly 10 may be adjusted by insertion into an adjustment box (not shown). The box may have two ports, one to inject compressed air at a determined pressure and the other to detect an air leak. After pressurizing the box to the predetermined pressure, a movement of the piston 80 away from the exhaust vent 110 is initiated until an air leak is detected. The piston 80 may then be locked into position by one or more set screws 140 (FIG. 4). The assembly 10 is now in an adjusted state for the predetermined pressure. The assembly 10 may now be removed from the box and assembled with a pneumatic tire. A supplemental cylindrical gasket/spacer 150 replacing the o-rings 120, may be added axially adjacent to the sleeve 70 for mitigating twisting during assembly. One of ordinary skill in the art will appreciate that the subject assembly in a pneumatic tire achieves significant advantage over a pneumatic tire without the assembly.

## Claims

1. An air maintenance tire comprising a tread region, first and second sidewalls extending from the tread region, a tire cavity and an air passageway enclosed within a flexing region of a tire wall, the air passageway having an air inlet portal operable to admit air into the air passageway and an outlet portal preferably spaced apart from the inlet portal operable to withdraw pressurized air from the air passageway, the air passageway operably closing segment by segment in reaction to induced forces from the tire flexing region as the flexing region of the tire wall rotates adjacent a rolling tire footprint, the air passageway having at least one check valve device seated within the air passageway, and wherein the tire further comprises a relief valve assembly (10) comprising a chamber body (20), a valve (50), a piston (80), and a ring (90) or seal, the valve (50) having a valve body and a deformable or moveable valve head (54).

2. The tire of claim 1 wherein the ring (90) is a silicone ring.

3. The tire of claim 1 or 2 wherein the valve head (54) is deformable to release over-pressurized air from the tire cavity to atmosphere; and/or wherein the valve head (54) comprises or is made of an elastic or elastomeric material such as rubber or silicone.

4. The tire of at least one of the previous claims wherein the air passageway is an elongate tubular, preferably at least partially circumferentially extending air passageway.

5. The tire of at least one of the previous claims wherein the valve head (54) is encased by or made or an elastic material and/or is configured to open and close an orifice (110) of the chamber body (20) to thereby allowing air escape to atmosphere.

6. The tire of at least one of the previous claims wherein the relief valve assembly (10) comprises an internal cavity (56) of the valve body and an internal cavity (22) of the chamber body (20).

7. The tire of at least one of the previous claims wherein the piston (80) is movable within a sleeve (70), the sleeve preferably comprising a bore (72).

8. The tire of at least one of the previous claims wherein the relief valve assembly (10) further comprises a gasket (120, 150) for sealing an interface between the piston (80) and the sleeve (70) and/or between the piston (80) and the valve body (20).

9. The tire of at least one of the previous claims wherein the valve body is tubular with the sleeve (70) being partially radially inserted into the valve body.

10. The tire of at least one of the previous claims wherein the valve body includes a preferably radial bore (72) defining an airway extending between an internal cavity (22) of the chamber body (20) and an internal cavity (54) of the valve body.

11. The tire of at least one of the previous claims wherein the sleeve (90) and the piston (80) at least partially define a valve internal cavity (54).

12. The tire of at least one of the previous claims wherein the ring (90) or seal or the silicone ring is fitted to an end of the piston (80).

13. The tire of at least one of the previous claims wherein in a first configuration the piston (80) and the ring (90) or seal is configured to be located entirely within an internal cavity (56) of the valve body and wherein in this first configuration simultaneously an air flow through a preferably radial bore (72) within the sleeve (70) is unobstructed; and/or wherein in a second configuration the piston (80) and the ring (90) or seal is configured to be located entirely within the sleeve (70) and wherein in this second configuration an air flow through a preferably radial bore (72) within the sleeve (70) is obstructed.

14. The tire of at least one of the previous claims wherein a radial clearance between the sleeve (70) and the piston (80) is provided to allow the pressure within the chamber body (20) and the pressure within the valve body to equalize.

15. The tire of at least one of the previous claims wherein the valve head (54) is maintained in a deformed condition.
